# FASCICULE DE BREVET EUROPEEN

(11) **EP 3 007 808 B1**
(45) Date de publication et mention de la délivrance du brevet: **12.05.2021**
(21) Numéro de dépôt: 14749869.5
(22) Date de dépôt: 10.06.2014
(51) Int. Cl.: B01D 63/06, B01D 46/24, B01D 67/00, B01D 69/10, B29C 67/00, B32B 3/12, C04B 38/00

(54) **PROCÉDÉ DE FABRICATION DE MEMBRANES DE FILTRATION PAR TECHNIQUE ADDITIVE ET MEMBRANES OBTENUES**
VERFAHREN ZUR HERSTELLUNG VON FILTRATIONSMEMBRANEN DURCH EINE ADDITIVE TECHNIK UND IN DIESEM VERFAHREN HERGESTELLTE MEMBRANEN
METHOD FOR MANUFACTURING FILTERING MEMBRANES BY ADDITIVE TECHNIQUE AND RESULTING MEMBRANES

(30) Priorité: 11.06.2013 FR 1355358
(43) Date de publication de la demande: 20.04.2016
(73) Titulaire: Technologies Avancées et Membranes Industrielles, 26110 Nyons (FR)
(72) Inventeur: LESCOCHE, Philippe, 26110 Piégon (FR); ANQUETIL, Jérôme, 76400 Sainte-Hélène-Bondeville (FR)
(74) Mandataire: Cabinet Beau de Loménie
(86) Numéro de dépôt international: PCT/FR2014/051383
(87) Numéro de publication internationale: WO 2014/199062

(56) Documents cités:
- WO-A1-2008/146037
- WO-A1-2012/032325
- DE-A1-102005 048 314
- US-A1- 2005 077 226
- US-A1- 2011 129 640
- US-A1- 2012 159 938

## Description

La présente invention concerne le domaine technique des éléments de filtration communément appelés membranes. Plus précisément, l'invention concerne un procédé de fabrication d'une membrane par méthode additive et une membrane susceptible d'être obtenue par un tel procédé.

Les procédés de séparation utilisant des membranes sont utilisés dans de nombreux secteurs, notamment dans l'environnement pour la production d'eau potable et le traitement des effluents industriels, dans l'industrie chimique, pétrochimique, pharmaceutique, agro-alimentaire et dans le domaine de la biotechnologie.

Une membrane constitue une barrière sélective et permet sous l'action d'une force de transfert le passage ou l'arrêt de certains composants du milieu à traiter. Le passage ou l'arrêt des composants peut résulter de leur taille par rapport à la taille des pores de la membrane qui se comporte alors comme un filtre. En fonction de la taille des pores, ces techniques sont nommées microfiltration, ultrafiltration ou nanofiltration.

Il existe des membranes de structures et textures différentes. Les membranes sont en général constituées d'un support poreux qui assure la résistance mécanique de la membrane et donne également la forme et donc détermine la surface filtrante de la membrane. Sur ce support, une ou plusieurs couches de quelques microns d'épaisseur assurant la séparation et dites couches séparatrices de filtration, couches de séparation, ou couches actives, sont déposées. Durant la séparation, le transfert du fluide filtré s'effectue à travers la couche séparatrice, puis ce fluide se répand dans la texture poreuse du support pour se diriger vers la surface extérieure du support poreux. Cette partie du fluide à traiter ayant traversé la couche de séparation et le support poreux est appelée perméat et se trouve récupérée par une chambre de collecte entourant la membrane. L'autre partie est appelée rétentat et est, le plus souvent, réinjectée dans le fluide à traiter en amont de la membrane, grâce à une boucle de circulation.

De manière classique, le support est d'abord fabriqué selon la forme souhaitée par extrusion, puis fritté à une température et pendant un temps suffisant pour assurer la solidité requise, tout en conservant dans la céramique obtenue la texture poreuse ouverte et interconnectée voulue. Ce procédé contraint à l'obtention de canaux rectilignes à l'intérieur desquels sont ensuite déposées et frittées la ou les couches séparatrices de filtration. La membrane ainsi réalisée subit donc au minimum deux opérations de frittage. Les liants organiques ajoutés à la pâte, avant son extrusion, brûlent en totalité pendant le frittage du support.

Une telle méthode donne satisfaction, mais il est toujours recherché d'augmenter la rentabilité du procédé et de limiter au maximum les défauts de conception.

Dans le cadre de l'invention, Il est proposé un nouveau procédé de fabrication de membranes qui permet d'obtenir, par rapport aux techniques antérieures, d'une part, un gain en termes de fiabilité et cadence de production, et d'autre part, une grande variabilité quant au choix des formes du support et des canaux à l'intérieur du support.

Dans ce contexte, la présente invention concerne un procédé de fabrication d'une membrane pour la filtration d'un fluide, ladite membrane comportant :
- un support présentant une structure tridimensionnelle et étant constitué d'un corps poreux céramique monolithique dont le diamètre moyen des pores appartient, de préférence, à la gamme allant de 4 µm à 40 µm, et
- au moins une couche séparatrice de filtration déposée sur une partie de la surface du support,
dans lequel la structure tridimensionnelle du support est réalisée par formation de strates élémentaires superposées et liées successivement entre elles, par répétition des étapes suivantes :
a) dépôt d'un lit continu de poudre constituée au moins en partie par une poudre destinée à former le corps poreux céramique, le lit étant d'épaisseur constante selon une surface supérieure à la section dudit corps poreux prise au niveau de la strate ;
b) consolidation localisée selon un motif déterminé pour chaque strate, d'une partie de la matière déposée pour créer la strate élémentaire, et liaison simultanée de la strate élémentaire ainsi formée à la strate précédente, de manière à faire croitre progressivement la forme tridimensionnelle souhaitée.

En d'autres termes, le procédé selon l'invention comprend la répétition des étapes suivantes :
a) dépôt d'un lit continu, homogène et d'épaisseur constante d'une matière en poudre, ce lit formant une couche couvrant une surface supérieure au motif de la section du corps poreux que l'on veut former pris au niveau de la strate ;
b) consolidation localisée d'une partie de la matière en poudre déposée suivant un motif prédéterminé pour la strate et liaison simultanée de cette matière nouvellement consolidée au motif précédemment consolidé dans la strate sous-jacente, de manière à faire croître progressivement strate après strate, la forme tridimensionnelle souhaitée.

Une fois la structure tridimensionnelle formée, la matière non consolidée est éliminée.

Dans le cadre de l'invention, l'étape b) est réalisée par un apport d'énergie.

La localisation de la consolidation est contrôlée de manière automatisée. Plus précisément, les points d'application de l'apport d'énergie ou de la projection de liquide sont contrôlés par ordinateur.

Dans le cadre de l'invention, la couche séparatrice de filtration qui, par définition se doit d'avoir un diamètre moyen de pores moindre que le support, peut être créée après formation du corps poreux, pour créer la surface destinée à être en contact avec le fluide à traiter.

La consolidation est réalisée par apport d'énergie, notamment par traitement laser, UV, faisceau d'électrons. L'apport d'énergie pourra être modulé, de manière à obtenir un gradient de diamètre moyen de pores au sein d'une même strate, et ainsi obtenir à la fois la croissance du support et de la couche séparatrice de filtration. Dans ce cas, la formation de la couche séparatrice et la formation du support sont toutes deux réalisées par mise en œuvre répétée des étapes a) et b).

Le plus souvent, la matière déposée sera exclusivement constituée d'une poudre destinée à former le corps poreux.

La matière déposée comprend, voire est exclusivement constitué, d'une poudre de matière inorganique qui va constituer la céramique finale ou d'une poudre de précurseurs organique-inorganiques ou inorganiques qui vont constituer la céramique finale.

Le corps poreux est de nature céramique et est constitué d'un oxyde métallique choisi parmi l'oxyde de titane, l'alumine, la zircone ou un de leur mélange.

La couche séparatrice de filtration est de nature céramique et est, le plus souvent, constituée d'un oxyde, d'un nitrure, d'un carbure, ou d'un autre matériau céramique ou d'un de leur mélange, les oxydes, nitrures et carbures métalliques étant préférés. En particulier, la couche séparatrice de filtration sera constituée, voire exclusivement constituée, d'oxyde de titane, d'alumine, de zircone ou d'un de leur mélange, ou encore de nitrure de titane, de nitrure d'aluminium, de nitrure de bore, de carbure de silicium éventuellement en mélange avec un autre matériau céramique.

Lorsque la ou les couches séparatrices de filtration et le support poreux sont, tous deux, constitués par la répétition des étapes a) et b), ils sont nécessairement en un même matériau. Par contre, lorsque la ou les couches séparatrices de filtration sont déposées sur le corps poreux déjà formé, par une technique classique de dépôt, ils peuvent être en une matière inorganique différente.

De manière avantageuse, quel que soit le mode de réalisation mis en œuvre, la taille moyenne des grains de la poudre déposée à l'étape a) est, de préférence, de 2,4 à quatre fois supérieure au diamètre moyen des pores que l'on veut obtenir dans la céramique, la morphologie et la distribution en tailles des grains de la poudre déposée ayant une influence sur le diamètre moyen des pores obtenu.

La présente invention a également pour objet les membranes obtenues par le procédé défini dans le cadre de l'invention. De telles membranes comportent :
- un support présentant une structure tridimensionnelle et étant constitué d'un corps poreux céramique monolithique, et
- au moins une couche séparatrice de filtration déposée sur une partie de la surface du support.

Le fait que la croissance de la structure tridimensionnelle du support ait été menée, conformément à l'invention, peut être mis en évidence par la visualisation de différentes strates par microscopie optique ou microscopie électronique à balayage, qui caractérisent les supports, voire les couches de séparation présentes dans de telles membranes lorsque celles-ci sont également faites par technique additive. Bien entendu, il pourra être recherché que la démarcation entre les différentes strates soit la plus faible possible.

Contrairement aux procédés de préparation de support par extrusion, procédant de manière continue, qui n'engendrent donc aucune frontière identifiable dans la texture du matériau du support notamment, le procédé défini dans le cadre de l'invention, procédant par couches additives et donc de manière discontinue, laisse une trace résiduelle à la frontière entre les strates.

La description qui va suivre, en référence aux figures annexées permet de mieux comprendre l'invention.

En préliminaire, quelques définitions des termes utilisés dans le cadre de l'invention vont être données,

Par taille moyenne des grains, on entend la valeur d50 d'une distribution volumique pour laquelle 50% du volume total des grains correspondent au volume des grains de diamètre inférieur à ce d50. La distribution volumique est la courbe (fonction analytique) représentant les fréquences des volumes des grains en fonction de leur diamètre. Le d50 correspond à la médiane, séparant en deux parties égales, l'aire située sous la courbe des fréquences, obtenue par granulométrie, par diffraction laser qui est la technique de référence retenue dans le cadre de l'invention pour la mesure du diamètre moyen des grains. On se référera, en particulier, pour la technique de mesure du d50 :
- à la norme ISO 13320:2009 pour ce qui concerne la technique de mesure par granulométrie laser,
- à la norme ISO 14488:2007 pour ce qui concerne les techniques d'échantillonnage de la poudre analysée,
- à la norme ISO 14887:2000 pour ce qui concerne une mise en dispersion reproductible de l'échantillon de poudre dans le liquide avant la mesure par granulométrie laser.

Par diamètre moyen de pores, on entend la valeur d50 d'une distribution volumique pour laquelle 58% du volume total des pores correspondent au volume des pores de diamètre inférieur à ce d50. La distribution volumique est la courbe (fonction analytique) représentant les fréquences des volumes des pores en fonction de leur diamètre. Le d50 correspond à la médiane séparant en deux parties égales l'aire située sous la courbe des fréquences obtenue par pénétration de mercure pour des diamètres moyens de pores supérieurs ou égaux à 4 nm, ou par adsorption de gaz, et notamment de N₂, lorsque les diamètres moyens de pores sont inférieurs à 4 nm, ces deux techniques étant retenues comme références dans le cadre de l'invention pour la mesure du diamètre moyen des pores.

En particulier, on pourra utiliser les techniques décrites dans :
- la norme ISO 15901-1:2005 pour ce qui concerne la technique de mesure par pénétration de mercure,
- les normes ISO 15901-2 :2006 et ISO 15901-3 :2007 pour ce qui concerne la technique de mesure par adsorption de gaz.

L'invention vise la fabrication de membranes de filtration par technique additive. Dans de telles membranes, le corps constituant le support présente une texture poreuse. Cette texture poreuse est caractérisée par le diamètre moyen des pores déduit de leur distribution mesurée par porométrie par pénétration de mercure.

La texture poreuse du support est ouverte et forme un réseau de pores interconnectées, ce qui permet au fluide filtré par la couche séparatrice de filtration de traverser le support poreux et d'être récupéré en périphérie. Il est d'usage de mesurer la perméabilité à l'eau du support pour qualifier la résistance hydraulique du support, ce qui permet dans le même temps de confirmer l'interconnexion de la texture poreuse. En effet, dans un milieu poreux, l'écoulement stationnaire d'un fluide visqueux incompressible est régi par la loi de Darcy. La vitesse du fluide est proportionnelle au gradient de la pression et inversement proportionnelle à la viscosité dynamique du fluide, via un paramètre caractéristique appelé perméabilité qui peut être mesurée, par exemple, selon la norme française NF X 45-101 de Décembre 1996.

Dans le cadre de l'invention, on vise plus particulièrement les membranes pour la filtration tangentielle d'un fluide. De telles membranes comportent un support poreux dans lequel différents chemins de circulation pour le fluide à filtrer sont aménagés. Ces chemins de circulation présentent une entrée et une sortie. En général, l'entrée des chemins de circulation est positionnée dans au moins une zone d'entrée pour le milieu fluide à traiter et leur sortie dans au moins une zone de sortie pour le rétentat. La zone d'entrée et la zone de sortie sont reliées par une zone périphérique continue où le support poreux est plein, et au niveau de laquelle le perméat est récupéré. La paroi des passages de circulation est recouverte par au moins une couche séparatrice de filtration qui assure la filtration du milieu fluide à filtrer.

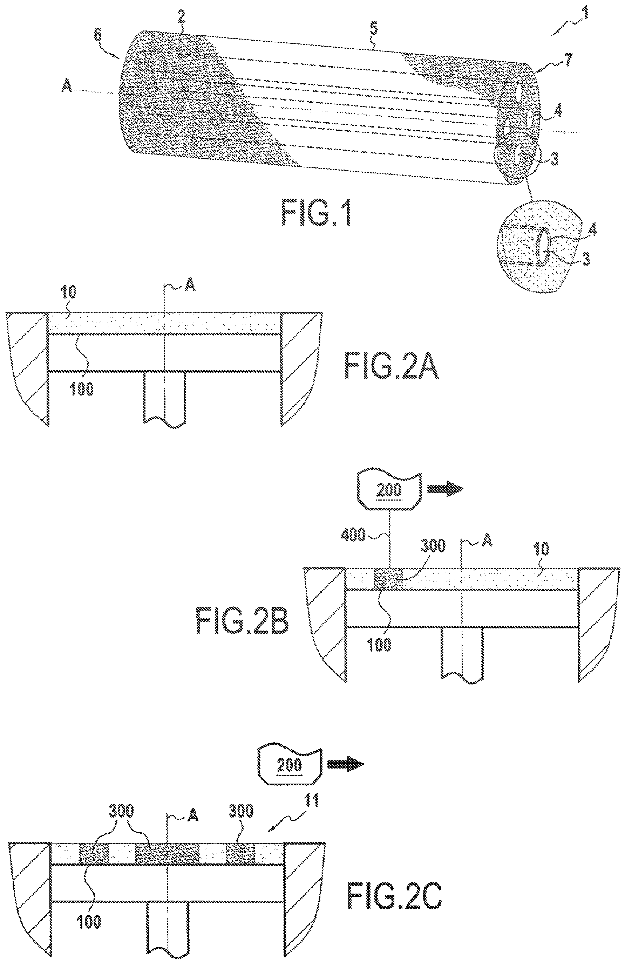

La **Figure 1** illustre un exemple d'une telle membrane de filtration **1** de géométrie tabulaire dans laquelle une série de canaux, correspondant aux passages de circulation, ont été aménagés, mais bien d'autres formes pourraient être construites avec le procédé selon (Invention. Selon cet exemple, la membrane de filtration **1** comporte un support poreux **2** réalisé sous une forme allongée s'étendant selon un axe central longitudinal **A.** Le support poreux **2** illustré **Figure 1** possède une section droite transversale circulaire et présente ainsi une surface extérieure **5** cylindrique, mais la section droite transversale pourrait être quelconque ou polygonale. Le support poreux **2** est aménagé pour comporter une série de canaux qui, dans l'exemple illustré, sont au nombre de quatre canaux **3** réalisés parallèlement à l'axe **A** du support. Les canaux **3** présentent chacun une surface recouverte par au moins une couche séparatrice **4,** destinée à être en contact avec le milieu fluide à traiter, circulant à l'intérieur des canaux **3.** Une partie du milieu fluide traverse la couche séparatrice **4** et le support poreux **2,** de sorte que cette partie traitée du fluide, appelée perméat, s'écoule par la surface extérieure **5** du support poreux. Le fluide à filtrer circule entre une zone d'entrée et une zone de sortie. Dans l'exemple illustré, la zone d'entrée **6** est située à une extrémité du support tubulaire et la zone de sortie **7** à l'autre extrémité.

Une membrane de filtration présente généralement une longueur de 1 mètre à 1,5 mètre. La section d'une membrane présente le plus souvent une surface de 0,8 cm² à 14 cm². Les épaisseurs des couches séparatrices de filtration varient typiquement entre 1 et 100 µm d'épaisseur. Bien entendu, pour assurer sa fonction de séparation, et servir de couche active, la couche séparatrice présente un diamètre moyen de pores inférieur au diamètre moyen de pores du support. Le plus souvent le diamètre moyen de pores de la couche séparatrice de filtration est au moins inférieur d'un facteur 3, et de préférence d'au moins un facteur 5 par rapport à celui du support.

Les notions de couche séparatrice de microfiltration, ultrafiltration et nanofiltration sont bien connues de l'homme de l'art. Il est généralement admis que :
- les couches séparatrices de microfiltration présentent un diamètre moyen de pores compris entre 0,1 et 2 µm,
- les couches séparatrices d'ultrafiltration présentent un diamètre moyen de pores compris entre 0,1 et 0,01 µm,
- les couches séparatrices de nanofiltration présentent un diamètre moyen de pores compris entre 0,5 et 2 nm.

Il est possible que cette couche de micro ou d'ultrafiltration soit déposée directement sur le support poreux (cas d'une couche de séparation monocouche), ou encore sur une couche intermédiaire de diamètre moyen de pores moindre, elle-même déposée directement sur le support poreux (cas d'une couche de séparation monocouche). La couche de séparation peut, par exemple, être à base de, ou constituée exclusivement, d'un ou plusieurs oxyde métallique, carbure ou nitrure ou autres céramiques, En particulier, la couche de séparation sera à base de, ou constituée exclusivement de TiO₂, Al₂O₃ et ZrO₂, seul ou en mélange.

Dans le cadre de l'invention, la fabrication de la membrane est réalisée grâce à une technique additive. Le support, voire la membrane dans son entier, est réalisé(e) strate après strate. Pour cela, en amont, grâce à un logiciel de conception par ordinateur, la structure tridimensionnelle du support ou de la membrane à réaliser est découpée en tranches. L'objet virtuel en trois dimensions à réaliser est ainsi découpé en tranches bidimensionnelles de très fine épaisseur. Ces fines tranches vont alors être réalisées une à une, sous forme de strate, en effectuant la répétition de la séquence binaire suivante :
- la matière nécessaire à la réalisation du support poreux, voire également de la couche séparatrice de filtration, lorsque les deux sont constitués d'un même matériau, est déposée sous la forme d'une poudre en un lit continu, puis
- son agglomération et sa liaison à la surface sur laquelle elle est déposée, sont réalisées localement selon un motif prédéfini par un apport d'énergie ou par projection d'un liquide en fines gouttelettes.

La première étape de la séquence binaire consiste à déposer un lit continu et homogène de poudre d'épaisseur constante selon une surface toujours supérieure à la section dudit corps poreux prise au niveau de la strate élémentaire à former, ceci de manière à garantir la qualité de finition du support obtenue sur les bords.

Une fois la matière consolidée selon le motif souhaité au niveau de ladite strate élémentaire, la matière excédentaire non consolidée sera ensuite éliminée, lors d'une étape finale, réalisée après construction de la totalité de la forme tridimensionnelle souhaitée.

Le support, voire la membrane dans son entier, est construit(e) par superposition de strates élémentaires liées entre elles par un apport d'énergie. L'apport localisé d'énergie peut se faire avec un faisceau de lumière dirigé (LED ou LASER) ou un faisceau d'électrons dirigés ou encore avec toute source d'énergie autorisant sa focalisation et un balayage du lit de poudre selon le motif sélectionné par CAO. L'interaction énergie-matière conduit alors soit à un frittage, soit à une fusion/solidification de la matière, soit encore à une photo-polymérisation ou photo-réticulation de la matière, selon sa nature et celle de la source d'énergie utilisée.

Différentes techniques additives pouvant être utilisées, dans le cadre de l'invention, pour la conception de la forme tridimensionnelle, sont détaillées ci-après.

### La SLS (de l'anglais Selective Laser Sintering) ou SLM (de l'anglais Selective Laser Melting)

Dans ce cas, une poudre de la matière destinée à constituer le support ou la membrane, par exemple une poudre d'un matériau céramique du type oxyde, nitrure ou carbure, voire une poudre de l'un de ses précurseurs, est déposée pour former un lit continu. Le faisceau d'un laser puissant est alors appliqué localement selon le motif sélectionné et permet d'agglomérer la poudre pour former la strate correspondant au support ou à la membrane et la lier à la strate précédente par frittage. Sous l'effet de l'apport d'énergie localisé, les grains de la poudre fusionnent partiellement et se soudent entre eux, ce qui donne sa cohésion à la strate, réalisant ainsi un pré-frittage de la forme en cours de réalisation. Un nouveau lit de poudre est ensuite étalé et le processus recommence.

Le faisceau du laser balaye la surface de la poudre de manière à consolider la matière selon le motif souhaité, strate par strate. Ce balayage peut être réalisé en déplaçant le laser selon des trajectoires parallèles. Il peut être avantageux qu'il y ait un recouvrement de la surface d'impact du laser entre deux trajectoires parallèles successives. La quantité d'énergie reçue par le lit de poudre à l'endroit de l'impact du faisceau laser doit être telle que la fusion des grains de poudre reste partielle ou dans tous les cas que chaque grain fusionne suffisamment pour se lier avec ses plus proches voisins sans fermer la texture poreuse.

Les réglages de la machine dépendront donc, notamment, des caractéristiques intrinsèques du lit de poudre et de la nature du matériau déterminant l'efficience de l'interaction photons/matière.

A titre indicatif, les conditions correspondant aux gammes présentées dans le **TABLEAU 1** ci-dessous pourront être utilisées :

**TABLEAU 1**

| | Min | Max |
|---|---|---|
| Taille moyenne des grains de la poudre céramique | 10 µm | 100 µm |
| Epaisseur du lit de poudre | 40 µm | 200 µm |
| Puissance du Laser | 100 W | 1000 W |
| Vitesse de déplacement du laser | 0,5 m/s | 10 m/s |

En ajustant localement la focalisation du faisceau laser et/ou la vitesse de déplacement du faisceau, il est possible d'ajuster la quantité d'énergie reçue par le lit de poudre et donc d'ajuster la densification du matériau céramique obtenu et, de ce fait, sa texture poreuse. Il est ainsi possible d'obtenir, à certains endroits, une texture poreuse correspondant à celle souhaitée pour la couche séparatrice de filtration, et à d'autres, celle souhaitée pour le support.

Bien que le frittage soit réalisé au fur et à mesure de la conception du support ou de la membrane, par application du laser, une étape finale de frittage pourra être avantageusement réalisée une fois la croissance du support ou de la membrane achevée, afin de libérer les contraintes mécaniques résiduelles et d'homogénéiser la texture poreuse. La température choisie pour un tel frittage final sera fonction de la nature du matériau inorganique utilisé et de la taille moyenne des grains de la poudre utilisée; par exemple une température de 1300°C à 1500°C sera utilisée dans le cas de l'oxyde de titane.

Les **Figures 2A** à **2F** illustrent la succession d'une telle séquence binaire pour la réalisation d'un support constitutif de la membrane présenté **Figure 1****,** dans le cas de l'utilisation de la technique SLS (ou SLM).

L'axe de croissance peut être choisi, de manière indifférente. Par exemple, dans le cas illustré **Figures 2A** à **2F****,** la croissance est réalisée parallèlement à l'axe du support, mais une croissance perpendiculairement à son axe, ou selon toute autre direction, pourrait aussi bien être mise en œuvre. Sur les **Figures 2A** à **2F****,** les épaisseurs des lits et strates sont volontairement surdimensionnées pour faciliter la compréhension.

Sur la **Figure 2A****,** un lit de poudre **10** est déposé sur une surface de dépose **100.** La **Figure 2B** illustre la consolidation de la strate qui est initiée par déplacement d'un laser **400** déplacé grâce à un dispositif de déplacement automatisé **200** permettant de chauffer localement la poudre sur des zones de consolidation **300** permettant de créer le motif **11.** La strate **11** consolidée selon le motif déterminé est illustrée **Figure 2C**. Dans l'exemple illustré, la consolidation est réalisée au moyen d'un faisceau laser qui est orienté localement sur les zones à consolider. Mais la technique serait mise en œuvre de manière similaire si un jet de liquide, sous la forme de micro-gouttelettes, était projeté localement sur le lit de poudre selon le motif sélectionné.

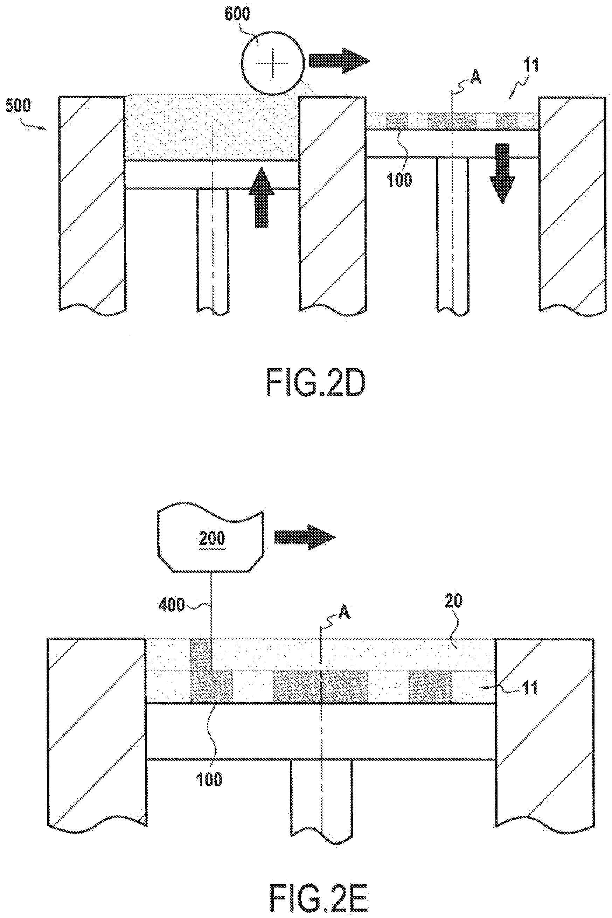

Ensuite, la surface **100** de dépose est déplacée verticalement, de manière à pouvoir déposer un nouveau lit de poudre **20** sur la strate **11** consolidée. La poudre est amenée par tout moyen approprié. La **Figure 2D** illustre un exemple de dispositif **500** permettant de déposer un nouveau lit de poudre. La poudre à déposer est stockée dans un container placé à côté du dispositif dans lequel la croissance de la forme tridimensionnelle à réaliser est effectuée. Dans l'exemple illustré, un rouleau **600** ou une racle est déplacé pour amener de la poudre sur la strate **11** précédente. Un tel rouleau **600** permet également d'étaler, voire compacter la poudre, de manière à former un lit **20** continu et homogène. Comme pour la strate précédente, le lit déposé s'étend selon une surface supérieure à la section du corps poreux à réaliser prise au niveau de la strate.

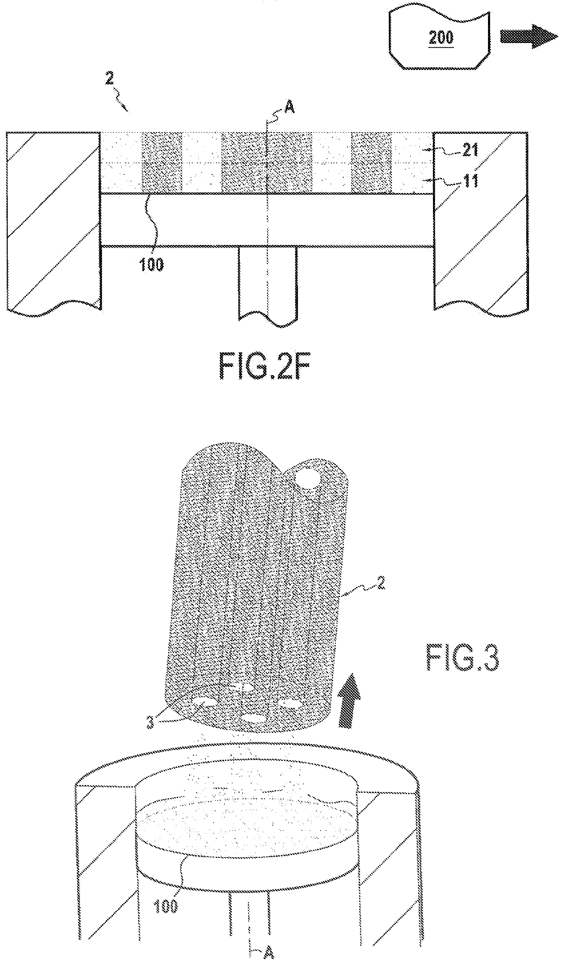

**Figure 2E****,** il apparaît que le lit **20** est déposé sur la strate **11** et recouvre toute sa surface. L'opération de déplacement du laser **400** et son application selon le motif déterminé, sont alors menées de manière à obtenir la consolidation de la strate suivante **21** et sa liaison à la strate précédente **11.** Dans l'exemple illustré, la croissance du support **2** est donc réalisée selon son axe longitudinal **A**. La **Figure 2F** montre les deux strates successives **11** et **21** obtenues.

L'exemple illustré est assez simple, de sorte que les motifs de consolidation correspondant à chacune des strates sont identiques. Mais la technique offre la possibilité de modifier le motif de consolidation au fur et à mesure de la croissance.

Ensuite, la matière qui n'a pas été consolidée est éliminée, en mettant à nu la forme tridimensionnelle voulue, par exemple, en la retirant simplement de la poudre restante et en ôtant la poudre résiduelle présente en surface, comme illustré **Figure 3****.** La poudre qui n'a pas été consolidée peut ensuite être réutilisée, évitant ainsi toute perte de matière.

### La LCM (Lithography-based Ceramic Manufacturing)

La LCM est une technique pour laquelle la poudre céramique est pré-mélangée à une résine photo-polymérisable, la consolidation par polymérisation étant obtenue avec une source de lumière LED ou LASER. Comme pour la technique précédemment décrite, il est nécessaire de supprimer la poudre non réticulée avant le cycle thermique de frittage qui permet le déliantage c'est-à-dire l'élimination de la résine photo-polymérisable puis le frittage proprement dit. Là encore, le processus illustré **Figures 2A** à **2F** reste le même, le dispositif **400** pouvant être un laser, ou une autre source de lumière de type LED.

L'utilisation de la LCM est limitée de par le fait que les grains de poudre doivent être transparents aux longueurs d'ondes considérées pour une polymérisation en volume sous et autour de l'impact lumineux.

Le procédé selon l'invention a l'avantage, par rapport aux techniques antérieures d'offrir des caractéristiques constantes et uniformes aux membranes, de réaliser le support en une seule étape de production ne nécessitant pas d'outillage ni d'usinage, et de permettre l'accès à une plus grande gamme de formes.

L'épaisseur du lit de poudre et donc de chaque strate successivement consolidée est relativement faible pour permettre sa liaison à la strate inférieure, par application de l'apport d'énergie ou projection du liquide. En particulier, une épaisseur de 20 µm à 200 µm de poudre sera déposée, cette épaisseur étant fonction de la technique additive sélectionnée.

C'est la répétition de la séquence binaire qui permet, strate après strate, de construire la forme tridimensionnelle souhaitée. Le motif de consolidation peut varier d'une strate à l'autre, La croissance de la forme tridimensionnelle souhaitée est réalisée selon un axe de croissance choisi.

La granulométrie de la poudre déposée est un des facteurs qui détermine l'épaisseur minimum de chaque lit de poudre, ainsi que le diamètre moyen des pores final obtenu. En particulier, on utilisera une poudre de la matière destinée à constituer le support, par exemple une poudre d'oxyde métallique, voire une poudre de l'un de ses précurseurs. La poudre déposée présentera, par exemple, une taille moyenne de grains de l'ordre de 35 µm pour l'obtention d'un diamètre moyen de pores dans le support en céramique de l'ordre de 10 µm.

La demanderesse a constaté que le réglage de différents paramètres tels que le choix du matériau et, pour un matériau donné, la taille moyenne des grains de la poudre mise en œuvre, et, pour un matériau et une granularité donnés, l'épaisseur du lit de poudre répété couche après couche d'une part et le réglage de différents paramètres propres à la technologie choisie pour la consolidation permet l'obtention et la maîtrise d'une texture poreuse résiduelle interconnectée au sein du monolithe consolidé. Cette texture poreuse résiduelle est le résultat d'un frittage contrôlé des grains de poudre laissant des vides inter-granulaires interconnectés.

Dans le cas de l'utilisation d'un faisceau d'énergie, les principaux paramètres, sur lesquels il est possible d'agir, sont sa focalisation c'est-à-dire le diamètre du faisceau au niveau de l'impact avec le fit de poudre, la vitesse de balayage du lit de poudre par le faisceau de photons ou d'électrons ou encore le taux de recouvrement des surfaces d'impact du faisceau d'énergie lors de la constitution d'une strate.

La demanderesse a également constaté qu'il était possible, en modulant les différents paramètres précédemment décrits, d'ajuster la distribution en taille des pores et, pour chaque population de pores donnée, de maîtriser leur nombre et leur tortuosité.

Une fois la poudre agglomérée dans les zones sélectionnées, la matière non agglomérée est éliminée par toute technique appropriée. La fluidité initiale de la poudre utilisée facilite cette opération. Il est possible également d'utiliser des techniques de jet d'eau ou des vibrations pour se débarrasser des dernières traces de poudre restant en surface de la forme réalisée.

La consolidation finale de l'élément filtrant et l'état final de la texture poreuse sont, le plus souvent, obtenus par un ou plusieurs post-traitements thermiques qui ont pour objectif le frittage du matériau proprement dit. La température choisie pour un tel frittage final, réalisé après élimination de la matière non-agglomérée excédentaire, sera fonction de la nature du matériau inorganique utilisé et de la taille moyenne des grains de la poudre utilisée.

Dans le cas de la LCM, la ou les couches séparatrices de filtration seront déposées une fois le support constitué, après l'opération finale de frittage. Le dépôt d'une couche séparatrice, notamment à la surface des canaux du support consistera à déposer sur ce dernier, une suspension contenant au moins une composition frittable destinée, après cuisson, à constituer une couche filtrante. Une telle composition présente une constitution classiquement utilisée dans la production des membranes inorganiques de filtration. Cette composition contient au moins un oxyde, un nitrure, un carbure, ou un autre matériau céramique ou un de leur mélange, les oxydes, nitrures et carbures métalliques étant préférés. La composition frittable est mise en suspension, par exemple dans de l'eau. Pour éliminer le risque de présence d'agrégats et pour optimiser la dispersion des grains dans le liquide, la suspension obtenue est broyée, afin de détruire les agrégats et obtenir une composition composée essentiellement de particules élémentaires. La rhéologie de la suspension est ensuite ajustée avec des additifs organiques pour satisfaire aux exigences hydrodynamiques de pénétration dans les canaux des supports. La couche une fois déposée, celle-ci est séchée, puis frittée à une température qui dépend de sa nature, de la taille moyenne de ses grains et du seuil de coupure visé.

Dans le cas de la SLS ou de la SLM, la ou les couches séparatrices de filtration peuvent être générées simultanément avec la croissance du support ou bien déposées ultérieurement selon les méthodes de dépôt classiques utilisées dans la production de membrane. Là encore, la ou les couches séparatrices de filtration peuvent être déposées à partir de suspensions de particules de la matière inorganique à déposer, ou d'un de ses précurseurs. De telles suspensions sont classiquement utilisées dans la production des éléments de filtration céramiques. Cette ou ces couches sont soumises après séchage à une opération de frittage qui permet de les consolider et de les lier à la surface sur laquelle elles sont déposées. La granulométrie des particules présentes dans la suspension sera fonction de la texture poreuse souhaitée au final pour la couche séparatrice de filtration.

Les exemples, ci-après, illustrent l'invention, mais n'ont aucun caractère limitatif.

Des membranes tubulaires, du type de celui présenté à la **Figure 1****,** sont fabriquées conformément à l'invention. Le support se présente sous la forme d'un tube de 300 mm à 1200 mm de long, dont la section droite transversale est circulaire, et présente un diamètre de 10 mm à 42 mm et dans lequel des canaux rectilignes parallèles à l'axe du tube sont aménagés.

### Exemple 1 : SLS / support seul

| Matériau | Oxyde de titane |
|---|---|
| Taille moyenne des grains de la poudre | 20-22 µm |
| Epaisseur du lit de poudre | 40 µm |
| Focalisation (diamètre du faisceau laser au point d'impact avec la poudre) | 50 µm |
| Atmosphère de la chambre | Air |
| Puissance du laser | 500 W |
| Vitesse de déplacement du laser | 2,5 m/s |
| % de recouvrement entre deux passages du laser | 20 - 25 % |
| Température du frittage final | 1380°C |
| Durée du palier à 1380°C | 2 heures |
| Diamètre moyen de pores obtenu | 6-7 µm |

### Exemple 2 : SLS / support + couche

| Matériau | Oxyde de titane | |
|---|---|---|
| Taille moyenne des grains de la poudre | 20-22 µm | |
| Epaisseur du lit de poudre | 40 µm | |
| Focalisation (diamètre du faisceau laser au point d'impact avec la poudre) | 50 µm | |
| Atmosphère de la chambre | Air | |
| Puissance du laser | 500 W | |

| | Support | Couche séparatrice |
|---|---|---|
| Vitesse de déplacement du laser | 5 m/s | 1 m/s |
| % de recouvrement entre deux passages du laser | 20 - 25 % | |
| Température du frittage final | 1380°C | |
| Durée du palier à 1388°C | 2 heures | |
| Diamètre moyen de pores obtenu | 6-7 µm | 1,4-1,5 µm |

### Exemple 3 : SLS / support seul

| Matériau | Carbure de silicium |
|---|---|
| Taille moyenne des grains de la poudre | 75-80 µm |
| Epaisseur du lit de poudre | 120 µm |
| Focalisation (diamètre du faisceau laser au point d'impact avec la poudre) | 100 µm |
| Atmosphère de la chambre | Argon |
| Puissance du laser | 500 W |
| Vitesse de déplacement du laser | 1,2 m/s |
| % de recouvrement entre deux passages du laser | 30 - 35 % |
| Diamètre moyen de pores obtenu | 25-30 µm |

Dans ce cas, aucun frittage final n'est nécessaire.

Dans le cas des exemples 1 et 3, la fabrication de la membrane est complétée par le dépôt d'une couche séparatrice à la surface des canaux réalisée à partir de la suspension suivante.

### Préparation de la suspension par broyage en broyeur à boulets

| Matériau | Oxyde de titane |
|---|---|
| Taille moyenne des grains de la poudre avant broyage | 3,6 µm |
| Ratio Oxyde de titane / eau | 0,4 |
| Durée du broyage | 5 heures |
| Taille moyenne des grains de la poudre après broyage | 1 µm |
| Ajout d'eau pour réglage de la rhéologie | 200 à 400 centipoises |

Une couche séparatrice de microfiltration ayant un seuil de coupure de 1,4 µm est obtenue après un dépôt direct sur le support de la manière suivante.

On fait pénétrer, par pompage, la suspension dans les canaux pour la mettre en contact avec la surface des canaux. Le mécanisme moteur du dépôt est l'attraction du liquide de la suspension par la porosité du support poreux.

L'épaisseur du dépôt de particules d'oxyde de titane en surface et donc la masse déposée par unité de surface dépend du temps de séjour de la suspension dans les canaux du support.

| | |
|---|---|
| Temps de séjour de la suspension dans les canaux | 30 secondes |
| Masse déposée | 50 à 60 g/m² |

L'opération est répétée deux fois pour une masse déposée finale de 110 g/m² environ.

### Cycle de cuisson pour un frittage de la couche

| | |
|---|---|
| Vitesse de montée en température jusqu'à 1200°C | 100°C/heure |
| Durée du palier à 1200°C | 1 heure |
| Refroidissement naturel | |

La fabrication de membranes de microfiltration avec des seuils de coupures inférieurs à 1,4 µm et des membranes d'ultrafiltration et de nanofiltration seront obtenus par dépôts successifs sur une telle première couche à partir de suspensions plus fines avec des cycles thermiques adaptés.

## Revendications

1. Procédé de fabrication d'une membrane pour la filtration tangentielle d'un fluide, ladite membrane comportant :
- un support présentant une structure tridimensionnelle et étant constitué d'un corps poreux céramique monolithique dans lequel des chemins de circulation pour le fluide à filtrer sont aménagés, lesdits chemins de circulation présentant une entrée et une sortie, le corps poreux étant constitué d'un oxyde métallique choisi parmi l'oxyde de titane, l'alumine, la zircone ou un de leur mélange,
- au moins une couche séparatrice de filtration recouvrant la paroi des passages de circulation,
procédé dans lequel la structure tridimensionnelle du support est réalisée par technique additive pour laquelle la structure tridimensionnelle du support est, grâce à un logiciel de conception par ordinateur, découpée en tranches, ces tranches étant réalisées une à une, sous forme de strates élémentaires superposées et liées successivement entre elles, par la répétition des deux étapes suivantes :
a) dépôt d'un lit continu, homogène et d'épaisseur constante d'une matière en poudre destinée à former le corps poreux céramique, le lit couvrant une surface supérieure à la section dudit corps poreux à former, prise au niveau de la strate ;
b) consolidation réalisée par apport d'énergie et localisée selon un motif déterminé pour chaque strate, d'une partie de la matière déposée pour créer la strate élémentaire, et liaison simultanée de la strate élémentaire formée à la strate précédemment formée lorsque celle-ci est présente, de manière à faire croître progressivement la forme de la structure tridimensionnelle souhaitée.

2. Procédé selon la revendication 1, **caractérisé en ce que** le support présente un diamètre moyen de pores appartenant à la gamme allant de 4 µm à 40 µm, le diamètre moyen de pores correspond à la valeur d50 de la distribution volumique, pour laquelle 50% du volume total des pores correspondent au volume des pores de diamètre inférieur à ce d50 ; la distribution volumique étant obtenue par pénétration de mercure, par exemple selon la technique décrite dans la norme ISO 15901-1 :2005.

3. Procédé selon l'une des revendications précédentes, **caractérisé en ce qu'**une fois la structure tridimensionnelle formée, la matière non consolidée est éliminée.

4. Procédé selon l'une des revendications précédentes, **caractérisé en ce que** la consolidation est contrôlée de manière automatisée.

5. Procédé selon l'une des revendications précédentes, **caractérisé en ce que** la consolidation est réalisée par traitement laser, UV, faisceau d'électrons.

6. Procédé selon l'une des revendications précédentes, **caractérisé en ce que** l'apport d'énergie est modulé, de manière à obtenir un gradient de porosité au sein d'une même strate.

7. Procédé selon l'une des revendications 1 à 5, **caractérisé en ce que** la couche séparatrice de filtration est créée après formation du corps poreux, pour créer la surface destinée à être en contact avec le fluide à traiter.

8. Procédé selon l'une des revendications précédentes, **caractérisé en ce que** la texture poreuse du corps poreux est ouverte et forme un réseau de pores interconnectées.

9. Procédé selon l'une des revendications précédentes, **caractérisé en ce que** la matière déposée comprend, voire est exclusivement constitué, d'une poudre de matière inorganique qui va constituer la céramique finale ou d'une poudre de précurseurs organique-inorganiques ou inorganiques qui vont constituer la céramique finale.

10. Procédé selon l'une des revendications précédentes, **caractérisé en ce que** le corps poreux et la couche séparatrice de filtration sont, chacun constitués d'une céramique, choisi parmi l'oxyde de titane, l'alumine, la zircone ou un de leur mélange.

11. Procédé selon l'une des revendications précédentes, **caractérisé en ce que** la granularité de la poudre déposée à l'étape a) est **caractérisée par** une taille moyenne des grains comprise entre 10 et 100 µm, la taille moyenne des grains correspondant à la valeur d50 de la distribution volumique pour laquelle 50% du volume total des grains correspondent au volume des grains de diamètre inférieur à ce d50, la distribution volumique étant obtenue par granulométrie par diffraction laser, en utilisant par exemple, les techniques décrites dans la norme ISO 13320:2009 pour ce qui concerne la technique de mesure par granulométrie laser, dans la norme ISO 14488:2007 pour ce qui concerne les techniques d'échantillonnage de la poudre analysée, et dans la norme ISO 14887:2000 pour ce qui concerne la mise en dispersion reproductible de l'échantillon de poudre dans un liquide avant la mesure par granulométrie laser.

12. Procédé selon l'une des revendications précédentes, **caractérisé en ce que** le motif de consolidation est modifié au fur et à mesure de la croissance de la structure tridimensionnelle.

13. Membranes obtenues par un procédé tel que défini à l'une des revendications 1 à 12, comportant des strates élémentaires de matériau superposées et liées entre elles.

## Patentansprüche

1. Verfahren zur Herstellung einer Membran für die Querstromfiltration eines Fluids, wobei die Membran umfasst:
- einen Träger, der eine dreidimensionale Struktur aufweist und aus einem porösen monolithischen Keramikkörper besteht, in welchen die Zirkulationswege für das zu filtrierende Fluid eingebracht sind, wobei die Zirkulationswege einen Eingang und einen Ausgang aufweisen, wobei der poröse Körper aus einem Metalloxid besteht, das aus Titanoxid, Aluminiumoxid, Zirkon oder einer von deren Mischungen ausgewählt ist,
- zumindest eine Filtrations-Trennschicht, welche die Wand der Zirkulationsdurchgänge bedeckt,
wobei in dem Verfahren die dreidimensionale Trägerstruktur durch eine additive Technik verwirklicht wird, für welche die dreidimensionale Trägerstruktur durch eine Entwicklungssoftware für Computer in Schnitte geteilt wird, wobei diese Schnitte einer nach dem anderen in der Form von elementaren Schichten, die übereinanderliegen und untereinander der Reihe nach verbunden sind, durch die Wiederholung der zwei folgenden Schritte verwirklicht werden:
a) Abscheidung eines durchgehenden, homogenen Betts konstanter Dicke aus einem Material in Pulverform, das dazu bestimmt ist, den porösen Keramikkörper zu bilden, wobei das Bett eine obere Oberfläche auf dem Querschnitt des zu bildenden porösen Körpers, auf Höhe der Schicht genommen, bedeckt;
b) lokalisierte und durch Energieeintrag verwirklichte Verfestigung, gemäß einem bestimmten Muster für jede Schicht, eines Teils des abgeschiedenen Materials, um die elementare Schicht zu schaffen, und gleichzeitige Verbindung der so gebildeten elementaren Schicht mit der zuvor gebildeten Schicht, sofern diese vorhanden ist, auf eine Weise, um die Form der gewünschten dreidimensionalen Struktur progressiv wachsen zu lassen.

2. Verfahren nach Anspruch 1, **dadurch gekennzeichnet, dass** der Träger einen mittleren Porendurchmesser aufweist, der in den von 4 µm bis 40 µm gehenden Bereich fällt, wobei der mittlere Porendurchmesser dem Wert d50 der Volumenverteilung entspricht, für welchen 50 % des Gesamtvolumens der Poren dem Volumen der Poren mit einem Durchmesser unter diesem d50 entsprechen, wobei die Volumenverteilung durch Quecksilberintrusion erhalten wird, zum Beispiel gemäß der in der Norm ISO 15901-1:2005 beschriebenen Technik.

3. Verfahren nach einem der vorhergehenden Ansprüche, **dadurch gekennzeichnet, dass** das nicht verfestigte Material entfernt wird, sobald die dreidimensionale Struktur gebildet wurde.

4. Verfahren nach einem der vorhergehenden Ansprüche, **dadurch gekennzeichnet, dass** die Verfestigung auf automatisierte Weise gesteuert wird.

5. Verfahren nach einem der vorhergehenden Ansprüche, **dadurch gekennzeichnet, dass** die Verfestigung durch Laser-, UV- oder Elektronenstrahlbehandlung verwirklicht wird.

6. Verfahren nach einem der vorhergehenden Ansprüche, **dadurch gekennzeichnet, dass** der Energieeintrag auf eine Weise moduliert wird, um einen Porositätsgradienten innerhalb ein und derselben Schicht zu erhalten.

7. Verfahren nach einem der Ansprüche 1 bis 5, **dadurch gekennzeichnet, dass** die Filtrations-Trennschicht nach der Bildung des porösen Körpers geschaffen wird, um die Oberfläche zu schaffen, die dazu bestimmt ist, mit dem zu behandelnden Fluid in Kontakt zu stehen.

8. Verfahren nach einem der vorhergehenden Ansprüche, **dadurch gekennzeichnet, dass** die poröse Textur des porösen Körpers offen ist und ein Netz von untereinander verbundenen Poren bildet.

9. Verfahren nach einem der vorhergehenden Ansprüche, **dadurch gekennzeichnet, dass** das abgeschiedene Material ein Pulver aus anorganischem Material, das die fertige Keramik bilden wird, oder ein Pulver aus organischanorganischen oder anorganischen Vorläufern, welche die fertige Keramik bilden werden, umfasst bzw. ausschließlich daraus besteht.

10. Verfahren nach einem der vorhergehenden Ansprüche, **dadurch gekennzeichnet, dass** der poröse Körper und die Filtrations-Trennschicht jeweils aus einer Keramik bestehen, die aus Titanoxid, Aluminiumoxid, Zirkon oder einer von deren Mischungen ausgewählt ist.

11. Verfahren nach einem der vorhergehenden Ansprüche, **dadurch gekennzeichnet, dass** die Korngröße des in Schritt a) abgeschiedenen Pulvers durch eine mittlere Größe der Körner zwischen 10 und 100 µm gekennzeichnet ist, wobei die mittlere Größe der Körner dem Wert d50 der Volumenverteilung entspricht, für welchen 50 % des Gesamtvolumens der Körner dem Volumen der Körner mit einem Durchmesser unter diesem d50 entsprechen, wobei die Volumenverteilung durch Korngrößenmessung mittels Laserdiffraktion erhalten wird, zum Beispiel unter Verwendung der in der Norm ISO 13320:2009 für die Messtechnik durch Laserkorngrößenmessung, in der Norm ISO 14488:2007 für die Techniken der Beprobung des analysierten Pulvers, und in der Norm ISO 14887:2000 für reproduzierbare Dispersion der Pulverprobe in einer Flüssigkeit vor der Messung durch Laserkorngrößenmessung beschriebenen Techniken.

12. Verfahren nach einem der vorhergehenden Ansprüche, **dadurch gekennzeichnet, dass** das Verfestigungsmuster mit dem Wachsen der dreidimensionalen Struktur schrittweise modifiziert wird.

13. Membranen, die durch ein Verfahren, wie in einem der Ansprüche 1 bis 12 definiert, erhalten werden und elementare Schichten aus Material beinhalten, die übereinanderliegen und untereinander verbunden sind.

## Claims

1. A process for the manufacture of a membrane for the tangential filtration of a fluid, said membrane comprising:
- a support exhibiting a three-dimensional structure and being composed of a monolithic ceramic porous body into which circulation pathways for the fluid to be filtered are inserted, said circulation pathways exhibiting an inlet and an outlet, the porous body being composed of a metal oxide chosen from titanium oxide, of alumina, of zirconia or of one of their mixture, and
- at least one separating filtration layer covering the wall of the circulation pathways,
process in which the three-dimensional structure of the support is produced by additive technique for which the three-dimensional structure of the support is cut into slices thanks to a computer design software, these slices being produced one by one in the form of superimposed individual sheets successively bonded to one another, by repetition of the following two stages:
a) deposition of a continuous, homogeneous powder bed of unvarying thickness, composed of a material in a powder form intended to form the ceramic porous body, the bed covering a surface greater than the section of said porous body to form taken at the level of the sheet;
b) consolidation carried out by energy contribution and localized according to a predetermined pattern for each sheet, of a portion of the deposited substance in order to create the individual sheet and simultaneous bonding of the individual sheet previously formed to the preceding sheet if present, so as to bring about the progressive growth of the shape of the desired three-dimensional structure.

2. The process as claimed in claim 1, **characterized in that** the support exhibits a mean pore diameter belonging to the range extending from 4 µm to 40 µm, the mean pore diameter corresponding to the d50 value of the distribution by volume for which 50% of the total volume of the pores correspond to the volume of the pores with a diameter of less than this d50; the distribution by volume being obtained by mercury penetration, for example according to the technique described in the standard ISO 15901-1:2005.

3. The process as claimed in one of the preceding claims, **characterized in that**, once the three-dimensional structure has been formed, the nonconsolidated substance is removed.

4. The process as claimed in one of the preceding claims, **characterized in that** the consolidation is controlled in automated fashion.

5. The process as claimed in one of the preceding claim, **characterized in that** the consolidation is carried out by laser, UV or electron beam treatment.

6. The process as claimed in one of the preceding claim, **characterized in that** the energy contribution is varied, so as to obtain a porosity gradient within one and the same sheet.

7. The process as claimed in one of claims 1 to 5, **characterized in that** the separating filtration layer is created after formation of the porous body in order to create the surface intended to be in contact with the fluid to be treated.

8. The process as claimed in one of the preceding claims, **characterized in that** the porous texture of the porous body is open and forms a network of interconnected pores.

9. The process as claimed in one of the preceding claims, **characterized in that** the deposited substance comprises, indeed even is exclusively composed of, a powder of inorganic substance which will constitute the final ceramic or of a powder of organic/inorganic or inorganic precursors which will constitute the final ceramic.

10. The process as claimed in one of the preceding claims, **characterized in that** the porous body and the separating filtration layer are each composed of a ceramic chosen from titanium oxide, of aluminia, of zirconia or of one of their mixtures.

11. The process as claimed in one of the preceding claims, **characterized in that** the grading of the powder deposited in stage a) is **characterized by** a mean grain size of between 10 and 100 µm, the mean grain size corresponding to the d50 value of the distribution by volume for which 50% of the total volume of the grains correspond to the volume of the grains with a diameter of less than this d50, the distribution by volume being obtained laser diffraction, for example using the techniques described in the standard ISO 13320:2009 as regards the technique for measuring by laser particle size determination, in the standard ISO 14488:2007 as regards the techniques for sampling the powder analyzed and in the standard ISO 14887:2000 as regards the reproducible dispersing of the powder sample in a liquid before the measurement by laser particle size determination.

12. Process according to any of the preceding claims, **characterized in that** the pattern of the consolidation is modified during the progressive growth of the three-dimensional structure.

13. Membranes obtained by a process as defined in one of claims 1 to 12, comprising individual sheets bonded to one another.
